# EUROPÄISCHE PATENTSCHRIFT

(11) **EP 3 030 429 B1**
(45) Veröffentlichungstag und Bekanntmachung des Hinweises auf die Patenterteilung: **02.09.2020**
(21) Anmeldenummer: 14741547.5
(22) Anmeldetag: 11.07.2014
(51) Int. Cl.: B60B 3/00, B60B 3/12, B60B 21/02

(54) **EINRICHTUNG ZUM GEZIELTEN SCHWÄCHEN EINER FORMSTABILITÄT EINER FELGE FÜR EIN RAD EINES KRAFTFAHRZEUGS**
DEVICE FOR WEAKENING A DIMENSIONAL STABILITY OF A RIM FOR A MOTOR VEHICLE WHEEL IN A CONTROLLED MANNER
DISPOSITIF DE RÉDUCTION CIBLÉE DE LA STABILITÉ DE LA FORME DONNÉE À UNE JANTE DESTINÉE À UNE ROUE DE VÉHICULE AUTOMOBILE

(30) Priorität: 07.08.2013 DE 102013215603
(43) Veröffentlichungstag der Anmeldung: 15.06.2016
(73) Patentinhaber: Bayerische Motoren Werke Aktiengesellschaft, 80809 München (DE)
(72) Erfinder: BINKOWSKI, Bernd, 81739 München (DE); FERNANDEZ, Ana, 82327 Tutzing (DE); HAMMER, Ulrich, 81677 München (DE); KELLER, David, 80638 München (DE); TOMASINI, Markus, 85640 Putzbrunn (DE); WENK, Marius, 80939 München (DE); CHIRICO, Dario, 81541 München (DE); REITER, Christoph, 81371 München (DE)
(86) Internationale Anmeldenummer: PCT/EP2014/064991
(87) Internationale Veröffentlichungsnummer: WO 2015/018602

(56) Entgegenhaltungen:
- WO-A1-2013/030106
- CN-U- 202 016 371
- DE-A1-102006 012 346
- JP-A- H06 183 201
- JP-A- 2005 014 844

## Beschreibung

Die Erfindung betrifft eine Einrichtung zum gezielten Schwächen einer Formstabilität einer Felge für ein Rad eines Kraftfahrzeugs nach dem Oberbegriff des Anspruchs 1..

Feigen für Räder eines Kraftfahrzeugs werden herkömmlich durch ein Gussverfahren oder ein Schmiedeverfahren mit hoher Formstabilität hergestellt. Im Falle eines Unfalls eines Kraftfahrzeugs sollte zur Verminderung von Schäden an Karosserieteilen und zur Verringerung einer Verletzungsgefahr für Fahrzeuginsassen verhindert werden, dass ein Rad bzw. eine Felge eines Rades zumindest teilweise in einen Abschnitt einer einen Radkasten ausbildenden Wandung eintritt. Diese Eindringungsgefahr ist insbesondere bei Frontalzusammenstößen mit einer Überlappung von etwa 25 % (sogenannter "Small Overlap Crash") gegeben.

Um das Ein- und Vordringen eines Rades bzw. einer Felge in eine Radkastenwandung und eventuell darüber hinaus zu verhindern, werden herkömmlich Verstärkungseinrichtungen an der Fahrzeugkarosserie, beispielsweise an Schwellern, in den möglichen Lastpfaden angeordnet, welche durch gezieltes Versagen Lasten auffangen. Die Anordnung solcher Verstärkungseinrichtungen kann die Gestaltungsfreiheit bei einer Konstruktion einer Fahrzeugkarosserie einengen und mit einer Erhöhung des Fahrzeuggewichtes verbunden sind.

Weiterhin sind verschiedene Maßnahmen bekannt, um im Falle eines kritischen Unfalls die Felge als solche geeignet zu verformen oder zu zerstören, so dass diese zumindest einen Teil des Crash-Energie absorbiert und nicht mehr in den Fahrzeug-Innenraum eindringen kann. Beispielsweise die DE 10 2006 012346 A1 zeigt solche Maßnahmen in Form von sog. Crashbohrungen oder Wandstärkenwechseln. Letzteres zeigt auch JP H06 183201 A. Ferner gibt die JP 2005 014844 A einen Hinweis, dass das Felgenbett stoßabsorbierend ausgebildet und in diesem Sinne geeignet deformierbar gestaltet sein kann.

Aufgabe der Erfindung ist es, hiermit weitere günstige und zuverlässige Maßnahmen zur Schwächung der Formstabilität eines Rades eines Kraftfahrzeugs aufzuzeigen. Die Lösung dieser Aufgabe ergibt sich mit den Merkmalen der Ansprüche 1 oder 6, während vorteilhafte Weiterbildungen zu Anspruch 1 in den abhängigen Ansprüchen 2 bis 5 angegeben sind.

Mit der Erfindung kann erreicht werden, dass eine Felge im Zuge der zumindest teilweisen Zerstörung ihrer Formgebung, beispielsweise durch gezielte plastische Verformung der Felge, bei einem Unfall auftretende Kräfte auffängt, also einen Teil einer Knautschzone eines Kraftfahrzeugs ausbildet. Alternativ oder zusätzlich kann erreicht werden, dass die Formgebung der Felge im Falle eines Unfalls derart zerstört wird, dass die Felge nicht eine Wandung eines Radkastens durchdringen kann. Beides macht die Anordnung von zusätzlichen Verstärkungseinrichtungen an der Fahrzeugkarosserie, beispielsweise an Schwellern, überflüssig, was mit einer entsprechenden Gewichtseinsparung einhergeht und Schäden an Radkästen und Schwellern sogar vermeiden kann. Zudem muss bei einem Entwurf einer Fahrzeugkarosserie nicht berücksichtigt werden, dass an bestimmten Stellen der Fahrzeugkarosserie Verstärkungseinrichtungen zum Verhindern des Eindringens einer Felge in den Fahrgastraum bzw. in die Stirnwand anzuordnen sind.

Vorgesehen ist zumindest eine an der Felge ausgebildete Sollschwachstelle, es können aber mehrere an der Felge ausgebildete Sollschwachstellen vorgesehen sein. Die Ausgestaltung und Ausrichtung jeder Sollschwachstelle ist an den jeweiligen Anwendungsfall angepasst. Vorzugsweise beginnt die zumindest teilweise Zerstörung der Formgebung einer Felge an der wenigstens einen Sollschwachstelle und pflanzt sich dann über ein vorgebbares Ausmaß und auf eine vorgebbare Art und Weise fort. Über die Ausgestaltung der Sollschwachstelle lässt sich sehr genau vorgeben, an welcher Stelle der Felge eine Zerstörung der Felge und ab welcher Größe einer äußeren Krafteinwirkung eine solche Zerstörung beginnen bzw. erfolgen soll.

Die Sollschwachstelle kann im Felgenhorn als Sollbruchstelle ausgebildet sein; ferner kann die Sollschwachstelle auch als Perforierung oder Nut gestaltet sein.

Im Falle einer Krafteinwirkung vorgebbaren Ausmaßes auf die Felge bzw. die Einrichtung bzw. die als Perforierung ausgebildete Schwachstelle kann die Felge entlang der Perforierung aufgetrennt werden. Hierdurch kann eine Zerlegung der Felge in zwei oder mehrere Teile erfolgen. Die Perforierung, begünstigt zudem die plastische Verformbarkeit einer Felge im Bereich der Perforierung. Die Perforierung kann auf einfache Art und Weise nachträglich an einer bereits vorhandenen Felge ausgebildet werden.

Vorteilhafterweise ist die Perforierung zumindest teilweise in einer Umgebung eines ersten Verbindungsbereichs zwischen wenigstens einer Speiche der Felge und einem Felgenbett der Felge angeordnet. In dem ersten Verbindungsbereich zwischen wenigstens einer Speiche der Felge und dem Felgenbett der Felge treten erfahrungsgemäß bei einem Unfall relativ große Lastspitzen auf, was ein gewünschtes Auftrennen und eine eventuelle Zerlegung einer mit der Perforierung versehenen Felge in dem Verbindungsbereich bewirkt. Die Perforierung kann jedoch auch in einem anderen geeigneten Bereich der Felge angeordnet sein.

Im Falle einer Sollschwachstelle in Form einer an einem Felgenhorn der Felge ausgebildeten Sollbruchstelle beginnt eine Zerstörung einer entsprechend ausgebildeten Felge an der Sollbruchstelle und pflanzt sich von dort fort. Selbstverständlich kann eine erfindungsgemäße Einrichtung auch zwei oder mehrere Sollschwachstellen aufweisen, welche eine Kombination der vorgenannten Ausgestaltungen für Sollschwachstellen ausbilden können. Beispielsweise können an einer Felge wenigstens eine Perforierung, wenigstens eine Materialverjüngung und/oder wenigstens eine Sollbruchstelle an einem Felgenhorn ausgebildet sein.

Nach einer weiteren vorteilhaften Ausgestaltung weist die Einrichtung wenigstens ein derart an der Felge angeordnetes Schwächungselement auf, dass das Schwächungselement bei Beaufschlagung der Einrichtung mit der äußeren Kraft vorgebbarer Größe seine Formgebung derart verändert, dass die Formgebung der Felge zumindest teilweise zerstört wird. Hiernach wird an der Felge ein zusätzliches Element, nämlich das Schwächungselement, angeordnet, um eine gewünschte Zerstörung der Felge im Schadensfall zu bewirken. Die Einrichtung kann auch zwei oder mehrere entsprechende Schwächungselemente aufweisen. Das Schwächungselement kann mit einer Sollschwachstelle gemäß den vorgenannten Ausgestaltungen kombiniert ist.

Beispielsweise kann das Schwächungselement wenigstens einen das Felgenbett zumindest teilweise umgebenden Ringkörper und wenigstens ein am Innenumfang des Ringkörpers angeordnetes Schwächungsglied aufweisen, wobei die auf die Einrichtung einwirkende äußere Kraft vorgebbarer Größe zumindest teilweise über den Ringkörper und das Schwächungsglied auf das Felgenbett übertragbar sind. Im Schadensfall dringt wenigstens ein Teil des Schwächungsglieds in das Felgenbett ein, was eine sich von dieser Eindringstelle fortpflanzende Zerstörung der Felge bewirkt. Die Anzahl der an dem Ringkörper in Umfangsrichtung gesehen jeweilig nebeneinander angeordneten Schwächungsglieder variiert vorzugsweise mit der jeweiligen Breite des Felgenbetts der Felge. Beispielsweise können 2 bis 5 Schwächungsglieder vorhanden sein, welches gleich oder unterschiedlich ausgebildet sein können.

Nach einer weiteren vorteilhaften Ausführungsform ist vorgesehen, dass das Schwächungselement als Vorspannelement ausgebildet ist, über das wenigstens zwei ausschließlich formschlüssig miteinander verbundene Teile der Felge steif gegeneinander verspannbar sind, wobei das Verspannungselement bei Beaufschlagung der Einrichtung mit der äußeren Kraft vorgebbarer Größe seine Formgebung derart verändert, dass die Verspannung der ausschließlich formschlüssig miteinander verbundene Teile der Felge gelöst wird. Das Vorspannelement kann durch zumindest einen Teil eines Felgenhorns der Felge oder als separates Bauteil ausgebildet sein.

Gemäß einer weiteren vorteilhaften Ausgestaltung kann das Schwächungselement als Ring aus einem spröden Material, insbesondere aus einem keramischen Werkstoff, ausgebildet sein, über den das Felgenbett mit den Speichen verbunden ist, wobei der Ring bei Beaufschlagung der Einrichtung mit der äußeren Kraft vorgebbarer Größe zumindest teilweise zerstört wird. Durch eine solche Zerstörung des Rings wird die Felge zerstört, indem die Speichen von dem Felgenbett gelöst werden.

Ein weiter oben genanntens Schwächungselement kann aber auch beispielsweise an einem Schweller des Kraftfahrzeugs angeordnet und bspw. als ein in Richtung der Felge gerichteter Vorsprung ausgebildet sein. In einem Schadensfall, bspw. bei einem Frontalzusammenstoß mit geringer Überlagerung, kann ein Rad bzw. eine Felge in Richtung eines Schwellers gedrängt werden. Hierdurch kommt die Felge in unmittelbaren Kontakt mit dem Vorsprung, welcher anschließend zumindest teilweise in die Felge, bspw. im Felgenbett, eindringt, wodurch eine sich von dieser Eindringstelle fortpflanzende Auftrennung bzw. Zerstörung der Felge bewirkt wird. Ein solches Schwächungselement kann aber auch am Schwenklager, Radträger oder Bremssattel angeordnet sein.

Mit Anspruch 7 wird eine Felge der eingangs genannten Art vorgeschlagen, die wenigstens eine Einrichtung nach einer der obigen Ausgestaltungen oder einer beliebigen Kombination derselben aufweist.

Weitere Einzelheiten, Merkmale und Vorteile der Erfindung ergeben sich aus der nachfolgenden Beschreibung und den Figuren. Es zeigen:
- Figur 1: eine schematische Darstellung eines Ausführungsbeispiels für eine erfindungsgemäße Felge,
- Figur 2: eine schematische Darstellung einer weiteren Felge,
- Figur 3: eine schematische Darstellung eines weiteren Ausführungsbeispiels für eine erfindungsgemäße Felge,
- Figur 4: eine schematische Darstellung eines weiteren Ausführungsbeispiels für eine erfindungsgemäße Felge,
- Figur 5: eine schematische Darstellung eines weiteren Ausführungsbeispiels für eine erfindungsgemäße Felge,
- Figur 6: eine schematische Darstellung eines weiteren Ausführungsbeispiels für eine erfindungsgemäße Felge,
- Figur 7: eine schematische Darstellung eines weiteren Ausführungsbeispiels für eine erfindungsgemäße Felge,
- Figur 8: eine schematische Darstellung eines weiteren Ausführungsbeispiels für eine erfindungsgemäße Einrichtung,
- Figur 9 bis 13: schematische Darstellungen weiterer Felgen, und
- Figur 14: eine schematische Darstellung eines weiteren Ausführungsbeispiels für eine erfindungsgemäße Einrichtung,

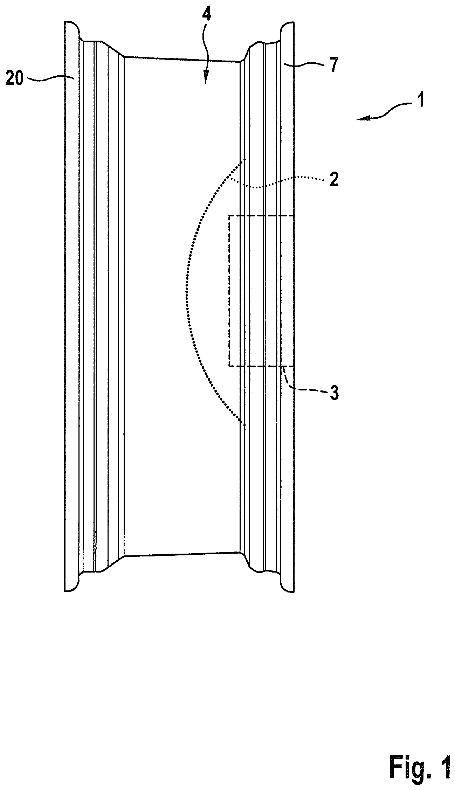

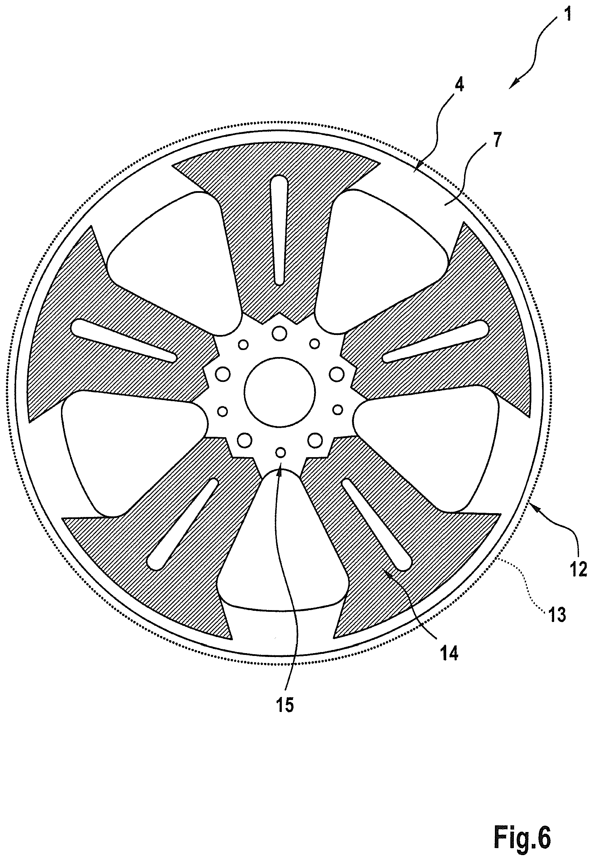

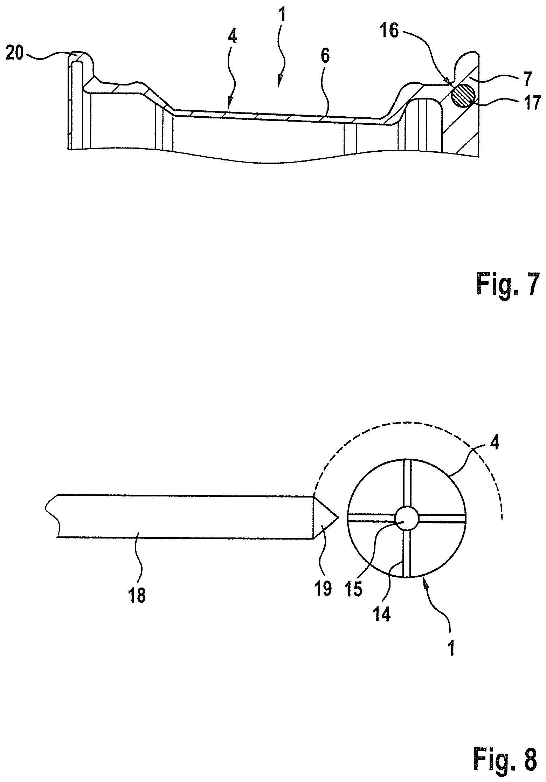

Figur 1 zeigt eine schematische Darstellung eines Ausführungsbeispiels für eine erfindungsgemäße Felge 1 für ein nicht gezeigtes Rad eines Kraftfahrzeugs. Die Felge 1 umfasst in den Figuren 6 und 8 gezeigte Speichen 14, ein Felgenbett 4 und ein ebenfalls in den Figuren 6 und 8 gezeigten Nabensegment 15. An das Felgenbett 4 schließen sich seitlich ein äußeres Felgenhorn 7 und ein inneres Felgenhorn 20 an.

Die Felge 1 weist eine Einrichtung zum gezielten Schwächen der Formstabilität der Felge 1 auf, welche in dieser Ausführungsform als eine an der Felge 1 ausgebildete Sollschwachstelle in Form einer Perforierung 2 ausgebildet ist. Die Perforierung ist durch eine Vielzahl an kleinen Materialaussparungen gebildet. Die Einrichtung bzw. Perforierung 2 ist derart ausgebildet, dass die Formgebung der Felge 1 bei einer Beaufschlagung der Einrichtung bzw. der Perforierung 2 mit einer äußeren Kraft vorgebbarer Größe zumindest teilweise zerstört wird. Die Perforierung 2 ist in einer Umgebung eines ersten Verbindungsbereichs 3 zwischen einer nicht näher dargestellten Speiche 14 der Felge 1 und einem Felgenbett 4 der Felge 1 angeordnet.

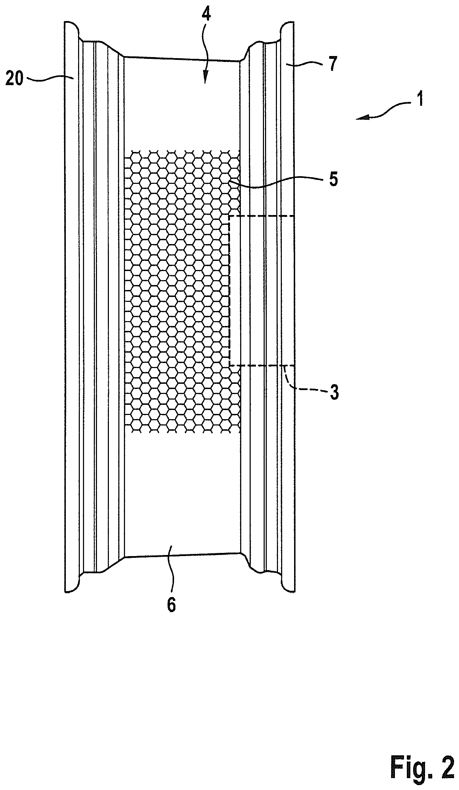

Figur 2 zeigt eine schematische Darstellung einer nicht erfindungsgemäßen Felge 1 für ein nicht gezeigtes Rad eines Kraftfahrzeugs. Die Felge 1 weist eine Einrichtung zum gezielten Schwächen der Formstabilität der Felge 1 auf, welche in dieser Ausführungsform als eine an der Felge 1 ausgebildete Sollschwachstelle in Form einer Materialverjüngung 5 ausgebildet ist, wobei die Materialverjüngung 5 ein regelmäßiges Muster an der Felge 1 ausgebildet und sich über einen Teil eines Tiefbettbereichs 6 des Felgenbetts 4 erstreckt. Die Einrichtung bzw. Materialverjüngung 5 ist derart ausgebildet, dass die Formgebung der Felge 1 bei einer Beaufschlagung der Einrichtung bzw. der Materialverjüngung 5 mit einer äußeren Kraft vorgebbarer Größe zumindest teilweise zerstört wird. Die Materialverjüngung 5 ist in einer Umgebung eines Verbindungsbereichs 3 zwischen einer nicht näher dargestellten Speiche 14 der Felge 1 und einem Felgenbett 4 der Felge 1 angeordnet.

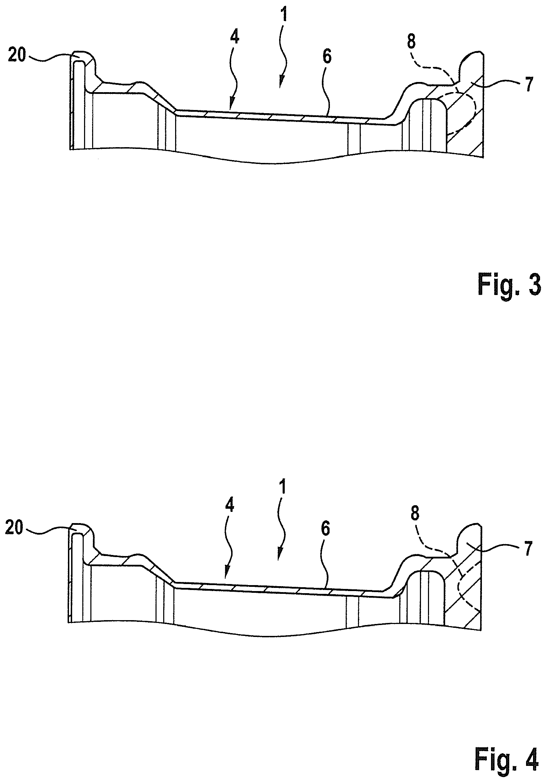

Figur 3 zeigt eine schematische Darstellung eines weiteren Ausführungsbeispiels für eine erfindungsgemäße Felge 1 für ein nicht gezeigtes Rad eines Kraftfahrzeugs. Die Felge 1 weist eine Einrichtung zum gezielten Schwächen der Formstabilität der Felge 1 auf, welche in dieser Ausführungsform als eine an der Felge 1 ausgebildete Sollschwachstelle in Form einer an dem Felgenhorn 7 der Felge 1 ausgebildeten, kerbenförmigen Sollbruchstelle 8 ausgebildet ist. Die Einrichtung bzw. Sollbruchstelle 8 ist derart ausgebildet, dass die Formgebung der Felge 1 bei einer Beaufschlagung der Einrichtung bzw. der Sollbruchstelle 8 mit einer äußeren Kraft vorgebbarer Größe zumindest teilweise zerstört wird. Die Sollbruchstelle 8 erstreckt sich vorzugsweise über den gesamten Umfang des Felgenhorns 7. Die Sollbruchstelle 8 ist auf einer der übrigen Felge 1 zugewandten Seite des Felgenhorns 7 ausgebildet.

Figur 4 zeigt eine schematische Darstellung eines weiteren Ausführungsbeispiels für eine erfindungsgemäße Felge 1 für ein nicht gezeigtes Rad eines Kraftfahrzeugs. Die Felge 1 weist eine Einrichtung zum gezielten Schwächen der Formstabilität der Felge 1 auf, welche in dieser Ausführungsform als eine an der Felge 1 ausgebildete Sollschwachstelle in Form einer an dem Felgenhorn 7 der Felge 1 ausgebildeten, kerbenförmigen Sollbruchstelle 8 ausgebildet ist. Die Einrichtung bzw. Sollbruchstelle 8 ist derart ausgebildet, dass die Formgebung der Felge 1 bei einer Beaufschlagung der Einrichtung bzw. der Sollbruchstelle 8 mit einer äußeren Kraft vorgebbarer Größe zumindest teilweise zerstört wird. Die Sollbruchstelle 8 erstreckt sich vorzugsweise über den gesamten Umfang des Felgenhorns 7. Die Sollbruchstelle 8 ist auf einer der übrigen Felge 1 abgewandten Seite des Felgenhorns 7 ausgebildet.

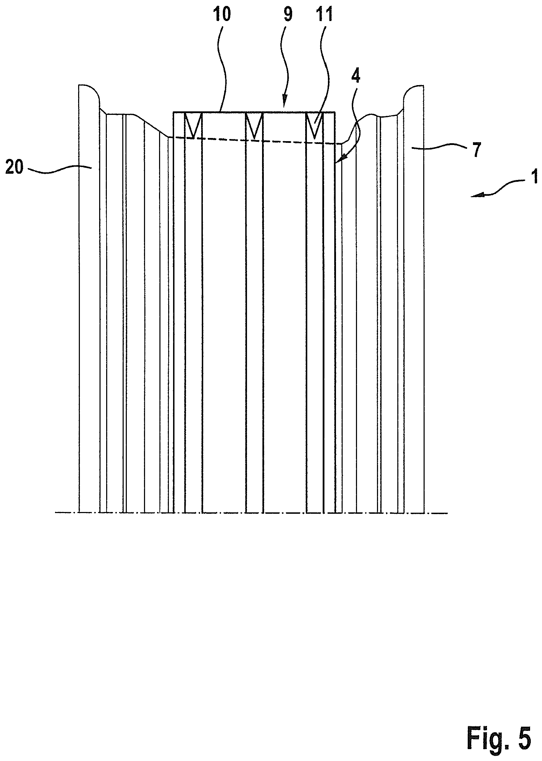

Figur 5 zeigt eine schematische Darstellung eines weiteren Ausführungsbeispiels für eine erfindungsgemäße Felge 1 für ein nicht gezeigtes Rad eines Kraftfahrzeugs. Die Felge 1 weist eine Einrichtung zum gezielten Schwächen der Formstabilität der Felge 1 auf, die wenigstens ein derart an der Felge 1 angeordnetes Schwächungselement 9 umfasst, dass das Schwächungselement 9 bei Beaufschlagung der Einrichtung mit der äußeren Kraft vorgebbarer Größe seine Formgebung derart verändert, dass die Formgebung der Felge 1 zumindest teilweise zerstört wird. Das Schwächungselement 9 weist einen das Felgenbett 4 umgebenden Ringkörper 10 und drei am Innenumfang des Ringkörpers 10 angeordnete ringförmige Schwächungsglieder 11 auf. Die auf die Einrichtung einwirkende äußere Kraft vorgebbarer Größe ist zumindest teilweise über den Ringkörper 10 und die Schwächungsglieder 11 auf das Felgenbett 4 übertragbar. Die Schwächungsglieder 11 weisen jeweils einen keilförmigen Querschnitt auf. Kommt es zu einer Beaufschlagung der Einrichtung bzw. des Schwächungselementes 9 bzw. des Ringkörpers 10 mit der äußeren Kraft vorgebbarer Größe, wird wenigstens ein Schwächungsglied 11 zumindest teilweise in Richtung des Felgenbettes 4 gedrängt und dringt dabei zumindest teilweise in das Felgenbett 4 ein, wodurch dieses bzw. die Felge 1 teilweise zerstört wird.

Figur 6 zeigt eine schematische Darstellung eines weiteren Ausführungsbeispiels für eine erfindungsgemäße Felge 1 für ein nicht gezeigtes Rad eines Kraftfahrzeugs. Die Felge 1 weist eine Einrichtung zum gezielten Schwächen der Formstabilität der Felge 1 auf, die wenigstens ein derart an der Felge 1 angeordnetes Schwächungselement 12 umfasst, dass das Schwächungselement 12 bei Beaufschlagung der Einrichtung bzw. des Schwächungselementes 12 mit der äußeren Kraft vorgebbarer Größe seine Formgebung derart verändert, dass die Formgebung der Felge 1 zumindest teilweise zerstört wird. Das Schwächungselement 12 ist als Vorspannelement 13 ausgebildet, über das die ausschließlich formschlüssig mit dem Felgenbett 4 verbundenen Speichen 14 der Felge 1 steif gegen das Felgenbett 4 verspannt sind und das ausschließlich formschlüssig mit den Speichen 14 verbundenes Nabensegment 15 gegen die Speichen 14 verspannt ist. Das Verspannungselement 13 verändert bei Beaufschlagung der Einrichtung bzw. des Vorspannelementes 13 mit der äußeren Kraft vorgebbarer Größe seine Formgebung derart, dass die Verspannung der ausschließlich formschlüssig miteinander verbundenen Teile 4, 14 und 15 der Felge 1 gelöst wird. Hierdurch zerfällt die Felge 1 in ihre einzelnen Teile 4, 14 und 15.

Figur 7 zeigt eine schematische Darstellung eines weiteren Ausführungsbeispiels für eine erfindungsgemäße Felge 1 für ein nicht gezeigtes Rad eines Kraftfahrzeugs. Die Felge 1 weist eine Einrichtung zum gezielten Schwächen der Formstabilität der Felge 1 auf, die wenigstens ein an der Felge 1 angeordnetes Schwächungselement 16 umfasst. Das Schwächungselement 16 ist als Ring 17 aus einem keramischen Werkstoff ausgebildet, über den das Felgenbett 4 mit den nicht näher dargestellten Speichen 14 der Felge 1 verbunden ist. Der Ring 17 wird bei Beaufschlagung der Einrichtung bzw. des Rings 17 mit der äußeren Kraft vorgebbarer Größe zumindest teilweise zerstört, wodurch das Felgenbett 4 von den Speichen 14 abgetrennt und somit die Felge 1 zerstört wird. Folglich verändert das Schwächungselement 16 bei Beaufschlagung der Einrichtung bzw. des Schwächungselementes 16 mit der äußeren Kraft vorgebbarer Größe seine Formgebung derart, dass die Formgebung der Felge 1 zumindest teilweise zerstört wird. Der Ring 17 ist in das Felgenhorn 7 eingebettet bzw. in das Felgenmaterial eingegossen und druckvorgespannt, während der ihn umgebende Abschnitt der Felge 1 bzw. des Felgenhorns 1 zugvorgespannt ist. Wird der Ring 17 durch die äußere Kraft vorgebbarer Größe zerstört, können auch die ihn umgebenden, relativ dünnwandig ausgebildeten Abschnitte des Felgenhorns 7 nachgeben, was ebenfalls zu einer Zerstörung des Felgenhorns 7 bzw. der Felge 1 führt.

Figur 8 zeigt eine schematische Darstellung eines weiteren Ausführungsbeispiels für eine erfindungsgemäße Einrichtung. Die Einrichtung weist ein an einem Schweller 18 des nicht näher dargestellten Kraftfahrzeugs angeordnetes Schwächungselement 19 auf, das als in Richtung der Felge 1 gerichteter Vorsprung ausgebildet ist. Wird die Felge 1 in Richtung des Schwächungselementes 19 gedrängt, dringt das Schwächungselement 19 zumindest teilweise in das Felgenbett 4 der Felge 1 ein, wodurch die Zerstörung der Felge 1 beginnt bzw. erfolgt.

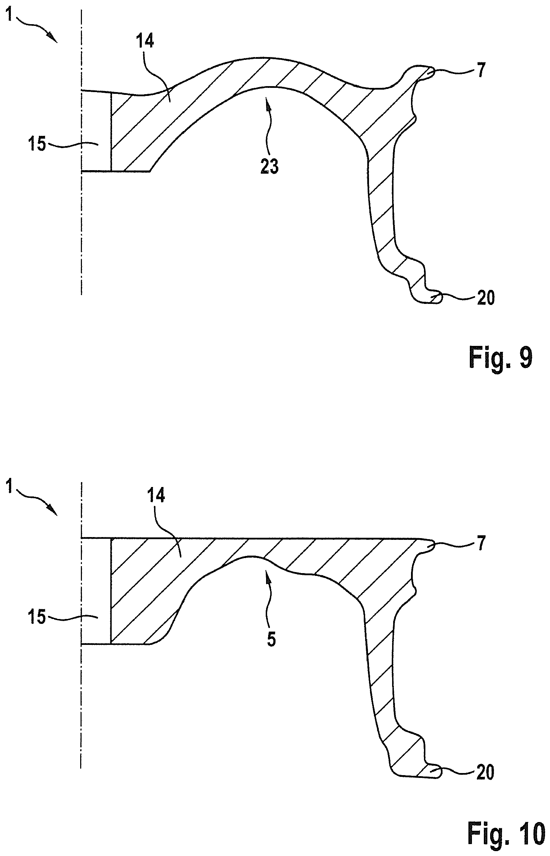

Figuren 9 bis 12 zeigen nicht erfindungsgemäße Möglichkeiten zur Ausbildung von Sollschwachstellen in der Felge 1.

Gemäß Figur 9 weist zumindest eine Speiche 14 der Feige 1 eine entsprechende Krümmung 23 als Sollschwachstelle auf. Die Krümmung 23 bzw. Vorkrümmung der Speiche 14 führt zu einer Reduktion der Knicklast und somit zu einer gewünschten Schwächung der Felge 1.

Figur 10 zeigt die Ausbildung der Sollschwachstelle als Materialverjüngung 5 in der Speiche 14. Die Materialverjüngung 5 in der Speiche 14 stellt eine Verjüngung oder Einkerbung der Speiche 14 dar und ermöglicht somit ähnlich wie die Krümmung 23 ein definiertes Ausknicken der Speiche 14. Idealerweise ist hier die Materialverjüngung 5 im Innenbereich der Felge 1 ausgebildet und somit nicht design-relevant.

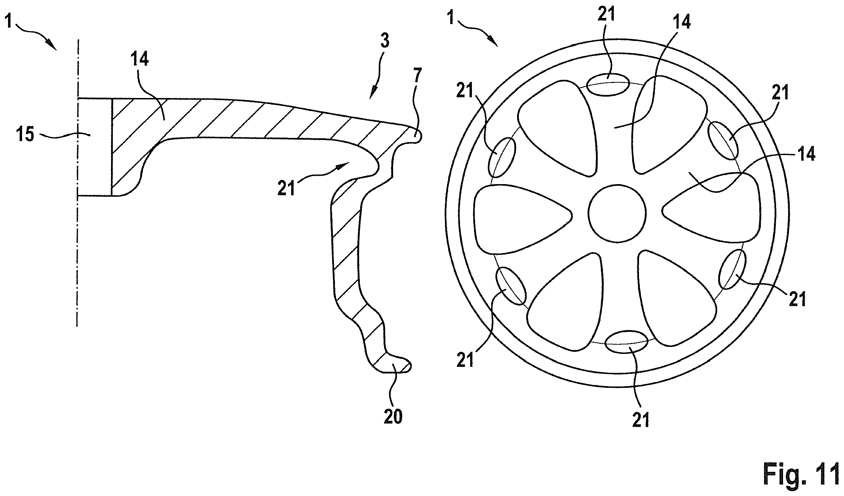

Figur 11 zeigt in Schnittansicht und Draufsicht die Ausbildung der Sollschwachstelle in Form einer Materialaussparung als Taschen 21 im ersten Verbindungsbereich 3. Insbesondere sind die Taschen 21 in Radialrichtung fluchtend mit den Speichen 14 angeordnet. Durch die Position der Taschen 21 ist das Felgenaußenhorn im Bereich des Speicheneinlaufs biegeweich gestaltet. Die Taschen 21, die bspw. als Ausfräsungen gefertigt sein können, reduzieren hier die Wandstärke im Bereich des Speichenanschlusses im Felgenbett.

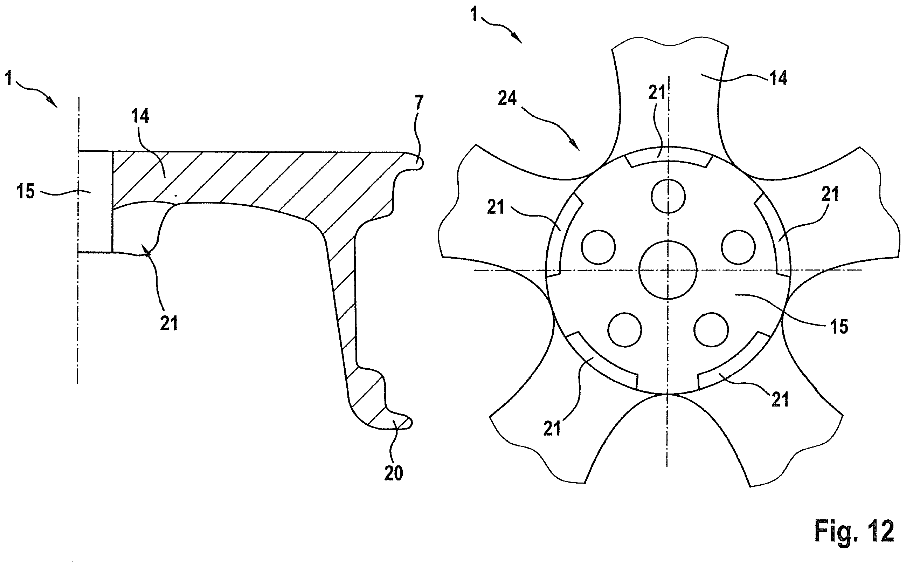

Figur 12 zeigt in Schnittansicht und Draufsicht die Ausbildung der Sollschwachstelle in Form einer Materialaussparung als Taschen 21 in einem zweiten Verbindungsbereich 24. Der zweite Verbindungsbereich 24 ist zwischen den Speichen 14 und dem Nabensegment 15 definiert. Insbesondere sind die Taschen 21 in Radialrichtung fluchtend mit den Speichen 14 angeordnet. Die Taschen 21 im zweiten Verbindungsbereich 24 befinden sich am Speicheneinlauf der Nabe, sodass auch dieser Bereich biegeweich ist. Insbesondere befinden sich die Taschen 21 im Bereich der Nabenauflagefläche. Die Nabengeometrie und die Tiefe der Taschen 21 wird entsprechend der gewünschten Schwächung gestaltet.

Die in den Figuren 9 bis 12 gezeigten Maßnahmen dienen der gezielten Schwächung der Felge 1 für ein Versagen durch geometrische Instabilität, insbesondere Ausknicken, Beulen oder Plastifizierung bis zum Bruch.

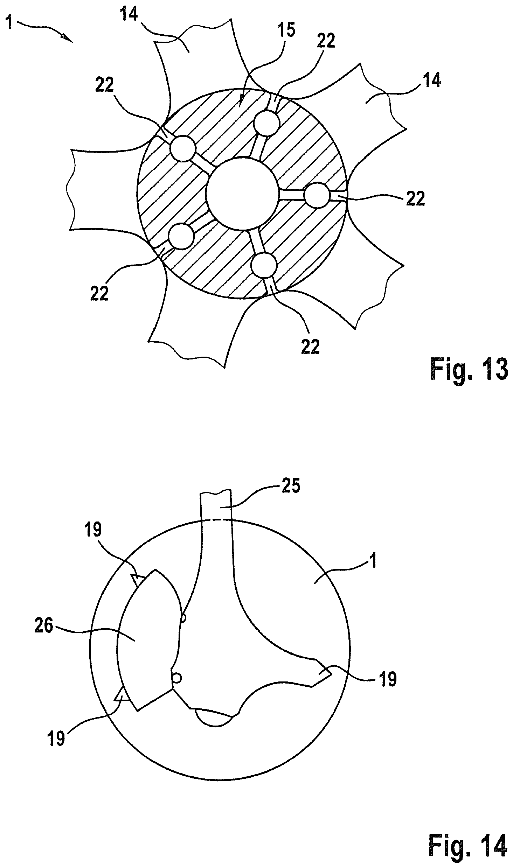

Figur 13 zeigt im Detail das Nabensegment 15 einer erfindungsgemäßen Felge 1. Zur Ausbildung der Sollschwachstelle sind im Nabensegment 15 mehrere Materialaussparungen in Form von Nuten 22 vorgesehen. Die Nuten 22 befinden sich vorteilhafterweise innen, an der Nabenauflagefläche. Idealerweise zur weiteren Schwächung des Schraubenlochbereichs verlaufen die Nuten 22 durch die Schraubenlöcher. Dabei können die Nuten 22 als Sicke unter dem jeweiligen Schraubenloch ausgeprägt sein. Alternativ oder zusätzlich können die Nuten 22 oder entsprechende Taschen zwischen den Speichen oder im Bereich der Poly-Kontrollbohrung angeordnet werden. Im Bereich der Nabe erfolgt ein Versagen der Felge 1 durch Materialversagen. Diese erfolgt typischerweise bei biegesteifen Speichen und somit bei geringer Verformung und geringer Plastizifizierung. Der Erstbruch erfolgt typischerweise in der Nabe im Bereich der Schraubenlöcher, deshalb werden, wie jetzt hier vorgeschlagen, die Nuten 22 durch die Schraubenlöcher zu legen.

Figur 14 zeigt rein schematisch die Felge 1 mit zugehörigem Schwenklager 25 und Bremssattel 26. Anstatt oder zusätzlich zu der Anordnung des Schwächungselementes 19 am Schweller 18, wie in Figur 8 gezeigt, kann zumindest ein Schwächungselement 18 am Bremssattel 26 und/oder am Schwenklager 25 angeordnet werden.

### Bezugszeichenliste:

- 1: Felge
- 2: Perforierung
- 3: erster Verbindungsbereich
- 4: Felgenbett
- 5: Materialverjüngung
- 6: Tiefbettbereich
- 7: Felgenhorn
- 8: Sollbruchstelle
- 9: Schwächungselement
- 10: Ringkörper
- 11: Schwächungsglied
- 12: Schwächungselement
- 13: Vorspannelement
- 14: Speiche
- 15: Nabensegment
- 16: Schwächungselement
- 17: Ring
- 18: Schweller
- 19: Schwächungselement
- 20: Felgenhorn
- 21: Tasche
- 22: Nut
- 23: Krümmung
- 24: zweiter Verbindungsbereich
- 25: Schwenklager
- 26: Bremssattel

## Patentansprüche

1. Einrichtung zum gezielten Schwächen einer Formstabilität einer Felge (1) für ein Rad eines Kraftfahrzeugs, wobei die Einrichtung derart ausgebildet ist, dass die Formgebung der Felge (1) bei einer Beaufschlagung der Einrichtung mit einer äußeren Kraft vorgebbarer Größe zumindest teilweise zerstört wird, und wobei die Einrichtung wenigstens eine an der Felge (1) ausgebildete Sollschwachstelle aufweist,
**dadurch gekennzeichnet, dass** die Sollschwachstelle durch wenigstens eine an einem Felgenhorn (7, 20) der Felge (1) ausgebildete Sollbruchstelle (8) ausgebildet ist oder in Form von durch Schraubenlöcher im Nabensegment (15) der Felge (1) verlaufende Nuten oder durch eine Perforierung (2) gebildet ist.

2. Einrichtung nach Anspruch 1, **gekennzeichnet durch** wenigstens ein an der Felge (1) angeordnetes Schwächungselement (9, 12, 16), welches bei Beaufschlagung mit der äußeren Kraft vorgebbarer Größe seine Formgebung derart verändert, dass die Formgebung der Felge (1) zumindest teilweise zerstört wird.

3. Einrichtung nach Anspruch 2 mit einem Schwächungselement (9) in Form wenigstens eines das Felgenbett (4) zumindest teilweise umgebenden Ringkörpers (10) und wenigstens eines am Innenumfang des Ringkörpers (10) angeordnetes Schwächungsglieds (11), wobei die einwirkende Kraft vorgebbarer Größe zumindest teilweise über den Ringkörper (10) und das Schwächungsglied (11) auf das Felgenbett übertragbar ist.

4. Einrichtung nach einem der vorangegangenen Ansprüche mit einem am Kraftfahrzeug angeordneten Schwächungselement (19), das als in Richtung der Felge (1) gerichteter Vorsprung, insbesondere Dorn, ausgebildet ist und am Schweller (18), und/oder am Schwenklager (25) und/oder am Radträger und/oder am Bremssattel (26) angeordnet ist.

5. Einrichtung nach Anspruch 2, **dadurch gekennzeichnet, dass** das Schwächungselement als Ring (17) aus einem spröden Material, insbesondere aus einem keramischen Werkstoff ausgebildet ist, über den das Felgenbett (4) mit den Speichen (14) verbunden ist, wobei der Ring (17) bei Beaufschlagung der Einrichtung mit der äußeren Kraft vorgebbarer Größe zumindest teilweise zerstört wird.

6. Einrichtung zum gezielten Schwächen einer Formstabilität einer Felge (1) für ein Rad eines Kraftfahrzeugs, wobei die Einrichtung derart ausgebildet ist, dass die Formgebung der Felge (1) bei einer Beaufschlagung der Einrichtung mit einer äußeren Kraft vorgebbarer Größe zumindest teilweise zerstört wird, und wobei die Einrichtung wenigstens eine an der Felge (1) ausgebildete Sollschwachstelle aufweist,
und wobei die Einrichtung weiter wenigstens ein an der Felge angeordnetes Schwächungselement (12) aufweist, welches bei Beaufschlagung mit der äußeren Kraft vorgebbarer Größe seine Formgebung derart verändert, dass die Formgebung der Felge (1) zumindest teilweise zerstört wird, **dadurch gekennzeichnet, dass** das Schwächungselement als Verspannungselement (13) ausgebildet ist, über das wenigstens zwei ausschließlich formschlüssig miteinander verbundene Teile (4, 14, 15) der Felge (1) steif gegeneinander verspannbar sind, wobei das Verspannungselement (13) bei Beaufschlagung der Einrichtung mit der äußeren Kraft vorgebbarer Größe seine Formgebung derart verändert, dass die Verspannung der ausschließlich formschlüssig miteinander verbundene Teile (4, 14, 15) der Felge (1) gelöst wird.

7. Felge (1) für ein Rad eines Kraftfahrzeugs, **gekennzeichnet durch** wenigstens eine Einrichtung nach einem der Ansprüche 1 bis 6.

## Claims

1. Device for the targeted weakening of a dimensional stability of a rim (1) for a wheel of a motor vehicle, wherein the device is configured in such a manner that the shape of the rim (1) when the device is impinged with an external force of predefinable magnitude is at least partially destroyed, and wherein the device has at least one predetermined weak point configured on the rim (1), **characterized in that** the predetermined weak point is configured by at least one predetermined breaking point (8) configured on a rim flange (7, 20) of the rim (1), or is formed in the form of grooves which run through screw bores in the hub segment (15) of the rim (1), or by a perforation (2).

2. Device according to Claim 1, **characterized by** at least one weakening element (9, 12, 16) which is disposed on the rim (1) and which when impinged with the external force of predefinable magnitude changes the shape thereof in such a manner that the shape of the rim (1) is at least partially destroyed.

3. Device according to Claim 2 having a weakening element (9) in the form of at least one annular body (10) which is at least partially surrounds the rim well (4), and at least one weakening member (11) which is disposed on the internal circumference of the annular body (10), wherein the force of predefinable magnitude acting thereon is at least in part transmittable to the rim well by way of the annular body (10) and the weakening member (11).

4. Device according to one of the preceding claims, having a weakening element (19) which is disposed on the motor vehicle and which is configured as a protrusion, in particular a spike, which is oriented in the direction of the rim (1) and is disposed on the sill (18) and/or on the pivot bearing (25) and/or on the wheel carrier and/or on the brake calliper (26).

5. Device according to Claim 2, **characterized in that** the weakening element is configured as a ring (17) consisting of a brittle material, in particular of a ceramic raw material, by way of which ring (17) the rim well (4) is connected to the spokes (14), wherein the ring (17) when the device is impinged with the external force of predefinable magnitude is at least partially destroyed.

6. Device for the targeted weakening of a dimensional stability of a rim (1) for a wheel of a motor vehicle, wherein the device is configured in such a manner that the shape of the rim (1) when the device is impinged with an external force of predefinable magnitude is at least partially destroyed, and wherein the device has at least one predetermined weak point configured on the rim (1), and wherein the device furthermore has at least one weakening element (12) which is disposed on the rim and which when impinged with the external force of predefinable magnitude changes the shape thereof in such a manner that the shape of the rim (1) is at least partially destroyed, **characterized in that** the weakening element is configured as a bracing element (13) by way of which at least two parts (4, 14, 15) of the rim (1) that are connected to one another exclusively in a form-fitting manner are able to be rigidly braced in relation to one another, wherein the bracing element (13) when the device is impinged with the external force of predefinable magnitude changes the shape thereof in such a manner that the bracing of the parts (4, 14, 15) of the rim (1) that are connected to one another exclusively in a form-fitting manner is released.

7. Rim (1) for a wheel of a motor vehicle, **characterized by** at least one device according to one of Claims 1 to 6.

## Revendications

1. Dispositif de réduction appropriée de la stabilité dimensionnelle d'une jante (1) destinée à une roue de véhicule automobile, le dispositif étant conçu de manière à ce que la conformation de la jante (1) soit au moins partiellement détruite lorsque le dispositif est soumis à une force extérieure d'intensité spécifiable, et le dispositif comportant au moins un point de moindre résistance mécanique formé sur la jante (1),
**caractérisé en ce que** le point de moindre résistance mécanique est formé par au moins un point de rupture (8) formé sur un rebord (7, 20) de la jante (1) ou est réalisé sous la forme de rainures s'étendant à travers des trous de vis ménagés dans le segment de moyeu (15) de la jante (1) ou par une perforation (2).

2. Dispositif selon la revendication 1, **caractérisé par** au moins un élément d'affaiblissement (9, 12, 16) qui est disposé sur la jante (1) et qui change de forme lorsqu'il est soumis à la force extérieure d'intensité spécifiable de façon à détruire au moins partiellement la conformation de la jante (1).

3. Dispositif selon la revendication 2 comprenant un élément d'affaiblissement (9) se présentant sous la forme d'au moins un corps annulaire (10) entourant au moins partiellement l'embase de jante (4) et d'au moins un élément d'affaiblissement (11) disposé sur la circonférence intérieure du corps annulaire (10), la force d'action d'intensité spécifiable pouvant être transférée au moins partiellement à l'embase de jante par le biais du corps annulaire (10) et de l'élément d'affaiblissement (11).

4. Dispositif selon l'une des revendications précédentes comprenant un élément d'affaiblissement (19) qui est disposé au niveau du véhicule automobile, qui est conçu comme une saillie, notamment une épine, dirigée vers la jante (1) et qui est disposé sur le seuil (18) et/ou sur le palier de pivotement (25) et/ou sur le porte-roue et/ou sur l'étrier de frein (26).

5. Dispositif selon la revendication 2, **caractérisé en ce que** l'élément d'affaiblissement est réalisé sous la forme d'un anneau (17) en un matériau fragile, notamment en céramique, et relie l'embase de jante (4) aux rayons (14), l'anneau (17) étant au moins partiellement détruit lorsque le dispositif est soumis à la force extérieure d'intensité spécifiable.

6. Dispositif de réduction appropriée de la stabilité dimensionnelle d'une jante (1) destinée à une roue de véhicule automobile, le dispositif étant conçu de manière à ce que la conformation de la jante (1) soit au moins partiellement détruite lorsque le dispositif est soumis à une force extérieure d'intensité spécifiable, et le dispositif comportant au moins un point de moindre résistance mécanique sur la jante (1) et le dispositif comportant en outre au moins un élément d'affaiblissement (12) qui est disposé au niveau de la jante, qui change de forme lorsqu'il est soumis à la force extérieure d'intensité spécifiable de telle sorte que la conformation de la jante (1) soit au moins partiellement détruite, **caractérisé en ce que** l'élément d'affaiblissement est conçu comme un élément de serrage (13) au moyen duquel au moins deux parties (4, 14, 15) de la jante (1), qui sont reliées l'une à l'autre exclusivement par complémentarité de formes, sont serrées rigidement l'une contre l'autre, l'élément de serrage (13) changeant de forme lorsque le dispositif est soumis à la force extérieure d'intensité spécifiable de façon à desserrer les parties (4, 14, 15) de la jante (1) qui sont reliées l'une à l'autre exclusivement par complémentarité de formes.

7. Jante (1) destinée à une roue d'un véhicule automobile, **caractérisée par** au moins un dispositif selon l'une des revendications 1 à 6.
